# EUROPÄISCHE PATENTSCHRIFT

(11) **EP 4 509 737 B1**
(45) Veröffentlichungstag und Bekanntmachung des Hinweises auf die Patenterteilung: **31.12.2025**
(21) Anmeldenummer: 23192093.5
(22) Anmeldetag: 18.08.2023
(51) Int. Cl.: F16D 55/28

(54) **BREMSEINHEIT, MOTOR-BREMSEN-KOMBINATION SOWIE VERFAHREN ZUR LUFTSPALTVERSTELLUNG**
BRAKE UNIT, MOTOR-BRAKE COMBINATION AND METHOD FOR ADJUSTING AN AIR GAP
UNITÉ DE FREINAGE, COMBINAISON MOTEUR-FREIN ET PROCÉDÉ DE RÉGLAGE DE L'ENTREFER

(43) Veröffentlichungstag der Anmeldung: 19.02.2025
(73) Patentinhaber: Kendrion INTORQ GmbH, 31855 Aerzen (DE); Siemens Gamesa Renewable Energy A/S, 7330 Brande (DK)
(72) Erfinder: Menze, Jannik, 31785 Hameln (DE); Westermann, Marko, 32816 Schwalenberg (DE); Fogh, Helge, 6852 Billum (DK)
(74) Vertreter: Westphal, Mussgnug & Partner Patentanwälte mbB

(56) Entgegenhaltungen:
- DE-B3- 102013 219 878
- DE-U1- 202016 003 948
- DE-U1- 7 822 318
- US-A- 3 613 849
- US-A- 3 665 231

## Beschreibung

Die Erfindung betrifft eine Bremseinheit, eine Motor-Bremsen-Kombination sowie ein Verfahren zur Luftspaltverstellung.

Eine Bremse weist üblicherweise zumindest zwei Bremselemente auf, die beim Schließen der Bremse miteinander in Reibkontakt treten. Häufig weist mindestens eines der Bremselemente dafür einen Reibbelag auf. Bei geöffneter Bremse ist zwischen den Bremselementen ein Luftspalt angeordnet.

Aus verschiedenen Gründen kann die Notwendigkeit bestehen, diesen Luftspalt, genauer gesagt, die Breite dieses Luftspalts zu verstellen. Ein häufiger Grund liegt darin, dass sich mit zunehmender Betriebsdauer der Bremse der Luftspalt durch Verschleiß an zumindest einem der Bremselemente, insbesondere an dem Reibbelag, vergrößert. Mit größer werdendem Luftspalt vergrößert sich auch das Lüftspiel. Übersteigt die Breite des Luftspalts ein bestimmtes Maß, kann dadurch die Funktion der Bremse beeinträchtigt werden. So sind beispielsweise Federdruckbremsen oberhalb einer bestimmten maximalen Spaltbreite nicht mehr funktionsfähig, da dann die magnetische Kraft des Elektromagnets nicht mehr ausreicht, um die Bremse zu lüften.

Seit langem wird daher nach Lösungen gesucht, um den Luftspalt zu verstellen, insbesondere mit zunehmendem Verschleiß nachzustellen. Entsprechende Vorschläge sind beispielsweise aus der DE 1 920 128 A1, US 3,665,231 oder der US 4,982,825 bekannt, bei denen das Einstellen des Luftspalts magnetgehäuseseitig erfolgt. Nachteilig an diesen Systemen sind jedoch insbesondere die erforderliche große Teileanzahl und die damit einhergehenden hohe Kosten und die Verschleiß- und Fehleranfälligkeit.

Der Erfindung liegt daher die Aufgabe zugrunde, eine Bremseinheit bereitzustellen, die eine einfache, zuverlässige und sichere Verstellung des Luftspalts ermöglicht und darüber hinaus einfach herstellbar ist. Der Erfindung liegt außerdem die Aufgabe zugrunde eine entsprechende Motor-Bremsen-Kombination bereitzustellen.

Ferner liegt der Erfindung die Aufgabe zugrunde, ein einfaches, eindeutiges sowie sicheres Verfahren zu Verstellung des Luftspalts bereitzustellen.

Die Aufgabe wird erfindungsgemäß gelöst durch eine Bremseinheit mit den Merkmalen des Patentanspruchs 1, eine Motor-Bremsen-Kombination mit den Merkmalen des Patenanspruchs 14 sowie ein Verfahren zur Luftspaltverstellung mit den Merkmalen des Patenanspruchs 15.

Vorteilhafte Ausgestaltungen und Weiterbildungen der Erfindung sind in den abhängigen Ansprüchen angegeben.

Eine erfindungsgemäße Bremseinheit umfasst eine Einheitslängsachse, ein erstes Bremselement mit einer ersten Elementlängsachse, ein zweites Bremselement mit einer zweiten Elementlängsachse, und ein Gehäuse. Das zweite Bremselement weist darüber hinaus eine erste Stirnseite, eine Bremsfläche und einer Vielzahl an unterschiedlichen Anlageflächen auf. Unter einer Vielzahl an unterschiedlichen Anlageflächen werden bevorzugt mindestens zwei unterschiedliche Anlageflächen verstanden.

Erfindungsgemäß sind die Anlageflächen auf der ersten Stirnseite des zweiten Bremselements angeordnet, das zweite Bremselement ist mittels jeder der Anlageflächen mit dem Gehäuse fest koppelbar, und die Bremsfläche ist bei Kopplung einer der Anlageflächen mit dem Gehäuse mit dem ersten Bremselement in Wirkverbindung bringbar, insbesondere zur Erzeugung einer Bremswirkung. Vorzugsweise sind die unterschiedlichen Anlageflächen dabei nicht gleichzeitig mit dem Gehäuse koppelbar. Zu demselben Zeitpunkt ist damit vorzugsweise nur eine der unterschiedlichen Anlageflächen mit dem Gehäuse gekoppelt. Unter einer "festen Kopplung" wird hier und im Folgenden vorzugsweise eine Kopplung verstanden, die derart ausgebildet ist, dass sie keine Relativbewegung der miteinander gekoppelten Teile zueinander zulässt. Dabei ist die Kopplung aber bevorzugt zerstörungsfrei lösbar ausgebildet. Vorliegend ist das zweite Bremselement insbesondere drehfest mit dem Gehäuse koppelbar. Zwischen dem zweiten Bremselement und dem damit gekoppelten Gehäuse können zusätzliche Elemente, insbesondere Abstandshalter, wie beispielsweise Distanzhülsen, angeordnet sein.

Die unterschiedlichen Anlageflächen unterscheiden sich erfindungsgemäß darin, dass sie zu der Bremsfläche entlang der zweiten Elementlängsachse unterschiedliche Abstände aufweisen sowie winklig versetzt zueinander angeordnet sind. Durch die Verwendung der unterschiedlichen Anlageflächen zur Kopplung des zweiten Bremselements mit dem Gehäuse kann vorzugsweise die Bremsfläche unterschiedlich nahe an dem ersten Bremselement angeordnet werden. Damit kann eine Breite eines Luftspalts, der bei geöffneter Bremseinheit vorzugsweise zwischen dem ersten Bremselement und dem zweiten Bremselement angeordnet ist, verstellt werden. Die Breite des Luftspalts bezeichnet dabei vorzugsweise eine bezogen auf die Einheitslängsachse im Bereich von 0 bis 1 mm. So kann beispielsweise der kleinste der Abstände 0 mm betragen und der größte der Abstände im Bereich von 0,5 bis 1 mm liegen. Bevorzugt weist das zweite Bremselement drei unterschiedliche Anlageflächen auf, nämlich eine erste Anlagefläche, eine zweite Anlagefläche und eine dritte Anlagefläche. Besonders bevorzugt weist dabei die erste Anlagefläche den kleinsten und die dritte Anlagefläche den größten der Abstände auf.

Vorzugsweise ist an dem ersten Bremselement mindestens ein Reibbelag angeordnet, der dafür vorgesehen ist, bei geschlossener Bremseinheit mit der Bremsfläche des zweiten Bremselements in Reibkontakt zu treten. Durch Verschieben und Anordnen des zweiten Bremselements derart, dass anstatt der ersten Anlagefläche die zweite oder dritte Anlagefläche mit dem Gehäuse gekoppelt ist, kann das verschleißbedingte Abnehmen des mindestens einen Reibbelags, zumindest teilweise, ausgeglichen werden. Vorzugsweise ist die Bremsfläche auf der ersten Stirnseite des zweiten Bremselements angeordnet. Damit können die Anlageflächen und die Bremsflächen auf derselben Stirnseite des zweiten Bremselements angeordnet sein. Dadurch kann der zur Luftspaltverstellung erforderliche Montageaufwand reduziert werden. Idealerweise kann auf eine Demontage des zweiten Bremselements, zumindest teilweise, verzichtet werden.

Vorzugsweise sind die Anlageflächen in einer Ausnehmung des zweiten Bremselements angeordnet. Bezogen auf die jeweils entsprechende Bremsfläche, kann die dritte Anlagefläche entlang der Einheitslängsachse damit beispielsweise tiefer in dem zweiten Bremselement angeordnet sein als die erste Anlagefläche. Bevorzugt sind die Anlageflächen parallel zu der Bremsfläche angeordnet. Dadurch können das Einstellen der Abstände der Anlagefläche zu der Bremsfläche in der Fertigung sowie die Montage des zweiten Bremselements vereinfacht werden.

Vorzugsweise sind das erste Bremselement und das zweite Bremselement entlang der Einheitslängsachse derart hintereinander angeordnet, dass die erste Elementlängsachse und die zweite Elementlängsachse jeweils auf der und parallel zu der Einheitslängsachse angeordnet sind. So kann die Wirkverbindung, insbesondere in Form eines Reibkontakts, durch eine Verschiebung des ersten Bremselements und/oder des zweiten Bremselements entlang der Einheitslängsachse hergestellt werden. Das zweite Bremselement kann im Wesentlichen scheibenförmig ausgebildet und derart anordenbar sein, dass die erste Stirnseite senkrecht zu der Einheitslängsachse ausgerichtet ist. Vorzugsweise ist das zweite Bremselement als Rotationskörper ausgebildet und besonders bevorzugt um die zweite Elementlängsachse angeordnet. Das zweite Bremselement kann im mit dem Gehäuse gekoppelten Zustand als Gehäusedeckel ausgebildet sein. Dafür kann sich insbesondere ein im Wesentlichen scheibenförmig ausgebildetes zweites Bremselement besonders eignen.

In einer bevorzugten Ausführungsform der Erfindung ist auf der ersten Stirnseite des zweiten Bremselements um die zweite Elementlängsachse ein gedachter Kopplungskreis angeordnet, wobei die Anlageflächen auf dem Kopplungskreis angeordnet sind. Dadurch kann durch ein Verdrehen des zweiten Bremselements gegenüber dem Gehäuse um einen Kopplungskreismittelpunkt die mit dem Gehäuse zu koppelnde Anlagefläche ausgewählt werden. Der Kopplungskreismittelpunkt ist vorzugsweise auf der zweiten Elementlängsachse angeordnet. Vorzugsweise ist jede der Anlageflächen auf dem Kopplungskreis angeordnet.

Das zweite Bremselement kann mindestens eine Anlagesektion aufweisen, die jeweils eine der unterschiedlichen Anlageflächen umfasst. So können die unterschiedlichen Anlageflächen gruppiert und die Luftspaltverstellung vereinfacht werden. Vorzugsweise umfasst die mindestens eine Anlagesektion jeweils genau eine der unterschiedlichen Anlageflächen. Bei drei unterschiedlichen Anlageflächen umfasst damit jede der mindestens einen Anlagesektion vorzugsweise drei der Anlageflächen. Die unterschiedlichen Anlageflächen der mindestens einen Anlagesektion können nach ihrem jeweiligen Abstand zur Bremsfläche aufsteigend geordnet angeordnet sein, vorzugsweise in Umfangsrichtung um die zweite Elementlängsachse. So kann durch ein schrittweises Weiterdrehen des zweiten Bremselements gegenüber dem Gehäuse der Luftspalt stufenweise verstellt werden.

Die unterschiedlichen Anlageflächen der mindestens einen Anlagesektion können beabstandet zueinander oder unmittelbar aneinander angrenzend angeordnet sein. Unter einer beabstandeten Anordnung wird dabei vorzugsweise eine räumlich voneinander getrennte Anordnung verstanden. Während durch eine beabstandete Anordnung der Sitz des Gehäuses bezüglich der entsprechenden Anlagefläche leicht eindeutig definiert werden kann, kann durch die unmittelbar aneinander angrenzende Anordnung eine Luftspaltverstellung mit vergleichsweise geringem axialem Spiel ermöglicht werden. Dabei sind die Anlageflächen der mindestens einen Anlagesektion bezüglich der zweiten Elementlängsachse winklig versetzt zueinander angeordnet und weisen damit einen winkligen Flächenversatz zueinander auf. Der Flächenversatz liegt bevorzugt im Bereich von 10° bis 30°, besonders bevorzugt im Bereich von 15° bis 25°.

In einer bevorzugten Ausführungsform der Erfindung umfasst die mindestens eine Anlagesektion mehrere, vorzugsweise beabstandet zueinander angeordnete, Anlagesektionen. Dabei sind die Anlagesektionen identisch ausgebildet. Die Anlagesektionen können bezüglich der zweiten Elementlängsachse winklig versetzt zueinander angeordnet sein und damit einen winkligen Sektionsversatz zueinander aufweisen. Als Sektionsversatz wird dabei vorzugsweise der Versatz der einander entsprechenden Anlageflächen der verschiedenen Anlagesektionen zueinander bezeichnet. Typischerweise ist der Sektionsversatz zwischen den identischen Anlageflächen verschiedener der Anlagesektionen größer als der Flächenversatz zwischen den Anlageflächen einer der Anlagesektionen. Vorzugsweise sind die Anlagesektionen gleichmäßig zueinander versetzt angeordnet. Im Fall von drei Anlagesektionen ergibt sich damit ein Sektionsversatz von 120°.

In einer Weiterbildung der Erfindung weist das zweite Bremselement mindestens eine Kopplungsbohrung zur Kopplung des zweiten Bremselements mit dem Gehäuse auf. Die Kopplungsbohrung kann als Gewindebohrung ausgebildet sein, sodass das zweite Bremselement mittels mindestens einer Kopplungsschraube an dem Gehäuse befestigbar ist. Alternativ kann die Kopplungsbohrung als Durchgangsbohrung zur Durchführung der Kopplungsschraube ausgebildet sein, mit der die Bremseinheit beispielsweise an einem Motorflansch befestigbar ist. Das zweite Bremselement kann in diesem Fall zwischen dem Gehäuse und dem Motorflansch eingeklemmt und so mit dem Gehäuse gekoppelt werden.

Die mindestens eine Kopplungsbohrung kann in mindestens einer der Anlageflächen angeordnet sein. Dadurch kann das Aufbringen eines Biegemoments auf das zweite Bremselement durch die mindestens eine Kopplungsschraube vermieden werden. Vorzugsweise ist die mindestens eine Kopplungsbohrung auf dem Kopplungskreis angeordnet. In jeder der Anlageflächen kann eine der mindestens einen Kopplungsbohrung angeordnet sein.

In einer Weiterbildung der Erfindung ist die mindestens eine Kopplungsbohrung als Langloch ausgebildet. Dadurch kann der Luftspalt verstellt werden, ohne dass die mindestens eine Kopplungsschraube entnommen werden muss. Vorzugsweise erstreckt sich das Langloch über alle der Anlageflächen der mindestens einen Anlagesektion, besonders bevorzugt entlang des Kopplungskreises. Damit kann das zweite Bremselement in jeder der mindestens einen Anlagesektion genau eine der mindestens einen Kopplungsbohrung aufweisen.

In einer bevorzugten Ausführungsform der Erfindung ist das erste Bremselement als Rotor und das zweite Bremselement als Stator ausgebildet. Das erste Bremselement ist vorzugsweise auf einer zu bremsenden Welle angeordnet.

Das erste Bremselement kann zwischen dem zweiten Bremselement und einem dritten, vorzugsweise als Stator ausgebildeten, Bremselement angeordnet sein, wobei das dritte Bremselement vorzugsweise entlang der Einheitslängsachse axial verschiebbar ist. Durch Verschieben des dritten Bremselements in Richtung des ersten Bremselements kann damit ein bremsender Reibkontakt zwischen dem ersten Bremselement und dem dritten Bremselement ausgebildet werden. Die für den Reibkontakt zwischen dem ersten Bremselement und dem dritten Bremselement vorgesehenen Flächen sind vorzugsweise entsprechend den für den Reibkontakt zwischen dem ersten Bremselement und dem zweiten Bremselement vorgesehenen Flächen ausgebildet. Besonders bevorzugt ist auch das zweite Bremselement entlang der Einheitslängsachse axial verschiebbar angeordnet. So kann zum Schließen der Bremseinheit jeweils ein Reibkontakt zwischen dem ersten Bremselement und dem zweiten Bremselement sowie zwischen dem ersten Bremselement und dem dritten Bremselement hergestellt werden.

In einer bevorzugten Ausführungsform ist die Bremseinheit als Federdruckbremse oder Permanentmagnetbremse ausgebildet.

Dabei kann das zweite Bremselement als Bremsenflansch und/oder das dritte Bremselement als Anker ausgebildet sein. Durch eine derartige Integration der Funktion kann die Teileanzahl der Bremseinheit reduziert werden. Als Bremsenflansch wird hier vorzugsweise ein Bauteil bezeichnet, mittels dessen die Bremseinheit an einer weiteren, insbesondere zu bremsenden, Vorrichtung, wie beispielsweise einem Motor, anordenbar ist. Der Begriff Anker bezieht sich hier vorzugsweise auf das von einem Elektromagneten zur Betätigung der Bremseinheit unmittelbar beeinflussbare Bauteil. Die Betätigung der Bremseinheit kann dabei sowohl das Öffnen als auch das Schließen der Bremseinheit umfassen.

Eine erfindungsgemäße Motor-Bremsen-Kombination, umfasst einen Motor mit einem Motorflansch sowie eine zuvor beschriebene Bremseinheit, wobei das zweite Bremselement mit einer zweiten Stirnseite dem Motorflansch zugewandt mit dem Motorflansch fest koppelbar ist. Die zweite Stirnseite ist vorzugsweise der ersten Stirnseite gegenüber angeordnet. Bei der Kopplung des zweiten Bremselements mit dem Motorflansch liegt vorzugsweise das zweite Bremselement, besonders bevorzugt mit der zweiten Stirnseite, zumindest abschnittsweise unmittelbar an dem Motorflansch an. Im Fall der Motor-Bremsen-Kombination kann die Welle durch eine Motorwelle gebildet sein.

Ein erfindungsgemäßes Verfahren zur Luftspaltverstellung bei einer zuvor beschriebenen Bremseinheit oder bei einer zuvor beschriebenen Motor-Bremsen-Kombination umfasst folgende Schritte:
- Entkoppeln des Gehäuses von dem zweiten Bremselement,
- Verdrehen des zweiten Bremselements um die Einheitslängsachse gegenüber dem Gehäuse,
- Koppeln des Gehäuses mit dem zweiten Bremselement.

Zum Entkoppeln des Gehäuses wird vorzugsweise die mindestens eine Kopplungsschraube gelöst. Sofern die mindestens eine Kopplungsschraube im montierten Zustand der Bremseinheit in der mindestens einen Kopplungsbohrung angeordnet ist, kann die mindestens eine Kopplungsschraube anschließend entfernt werden. Daraufhin kann das zweite Bremselement um die Einheitslängsachse gegenüber dem Gehäuse verdreht werden, sodass das Gehäuse mit einer anderen der Anlageflächen als zuvor mit dem zweiten Bremselement gekoppelt werden kann. Dazu wird das zweite Bremselement, vorzugsweise um den Flächenversatz oder ein ganzzahlig Vielfaches des Flächenversatzes, verdreht. Anschließend kann der Zusammenbau in der entsprechend umgekehrten Reihenfolge erfolgen. Bei diesem Verfahren zur Verstellung des Luftspalts muss das zweite Bremselement nicht weiter, insbesondere nicht von der Welle, demontiert werden. Ein derartiges Vorgehen kann demnach insbesondere dann von Vorteil sein, wenn die Bremseinheit vom zweiten Bremselement her unzugänglich ist, beispielsweise weil dort, insbesondere im Fall der Motor-Bremsen-Kombination, der Motor angeordnet sein kann.

Mehrere Ausführungsbeispiele der Erfindung werden anhand der nachfolgenden Figuren erläutert. Es zeigt:
- Figur 1: eine Draufsicht eines ersten Ausführungsbeispiels einer Bremseinheit mit eingezeichneten Teilschnitten C-C und D-D,
- Figur 2: eine Schnittansicht des in Fig. 1 gezeigten Ausführungsbeispiels,
- Figur 3: eine Ansicht des in Fig. 1 eingezeichneten Teilschnitts C-C mit eingezeichnetem Detail E,
- Figur 3a: eine Ansicht des in Fig. 3 eingezeichneten Details E,
- Figur 4: eine Ansicht des in Fig. 1 eingezeichneten Teilschnitts D-D mit eingezeichnetem Detail F,
- Figur 4a: eine Ansicht des in Fig. 4 eingezeichneten Details F,
- Figur 5: eine Draufsicht eines zweiten Ausführungsbeispiels einer Bremseinheit mit eingezeichneten Teilschnitten C-C, D-D und G-G,
- Figur 6: eine Ansicht des in Fig. 5 eingezeichneten Teilschnitts C-C mit eingezeichnetem Detail E,
- Figur 6a: eine Ansicht des in Fig. 6 eingezeichneten Details E,
- Figur 7: eine Ansicht des in Fig. 5 eingezeichneten Teilschnitts D-D mit eingezeichnetem Detail F,
- Figur 7a: eine Ansicht des in Fig. 7 eingezeichneten Details F,
- Figur 8: eine Ansicht des in Fig. 5 eingezeichneten Teilschnitts G-G mit eingezeichnetem Detail H,
- Figur 8a: eine Ansicht des in Fig. 8 eingezeichneten Details H,
- Figur 9: eine Draufsicht eines dritten Ausführungsbeispiels einer Bremseinheit mit eingezeichneten Teilschnitten C-C, D-D und G-G,
- Figur 10: eine Ansicht des in Fig. 9 eingezeichneten Teilschnitts C-C mit eingezeichnetem Detail E,
- Figur 10a: eine Ansicht des in Fig. 10 eingezeichneten Details E,
- Figur 11: eine Ansicht des in Fig. 9 eingezeichneten Teilschnitts D-D mit eingezeichnetem Detail F,
- Figur 11a: eine Ansicht des in Fig. 11 eingezeichneten Details F,
- Figur 12: eine Ansicht des in Fig. 9 eingezeichneten Teilschnitts G-G mit eingezeichnetem Detail H,
- Figur 12a: eine Ansicht des in Fig. 12 eingezeichneten Details H.

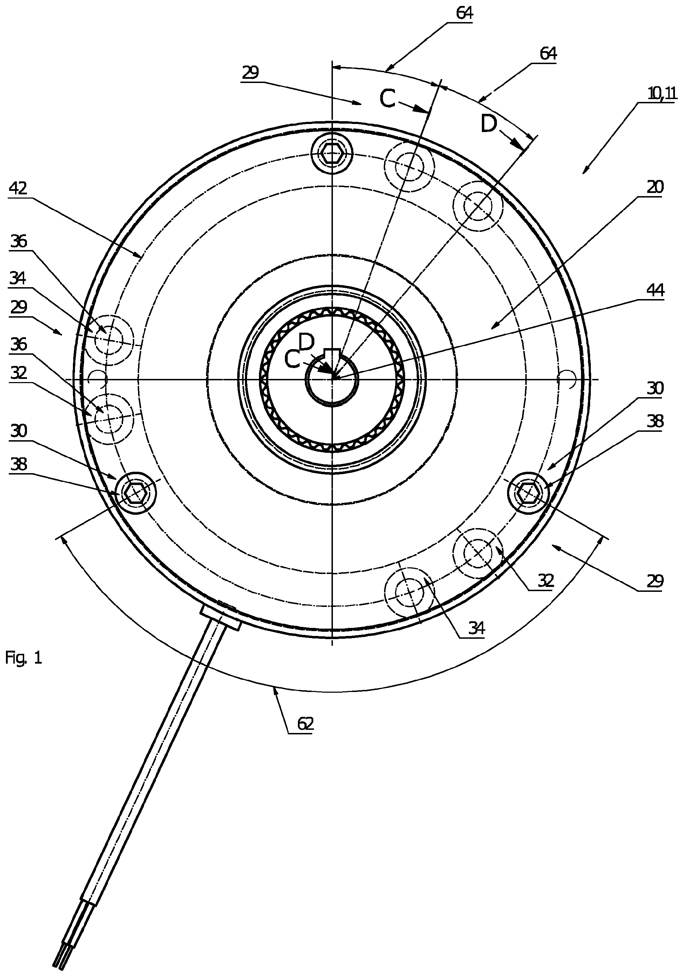

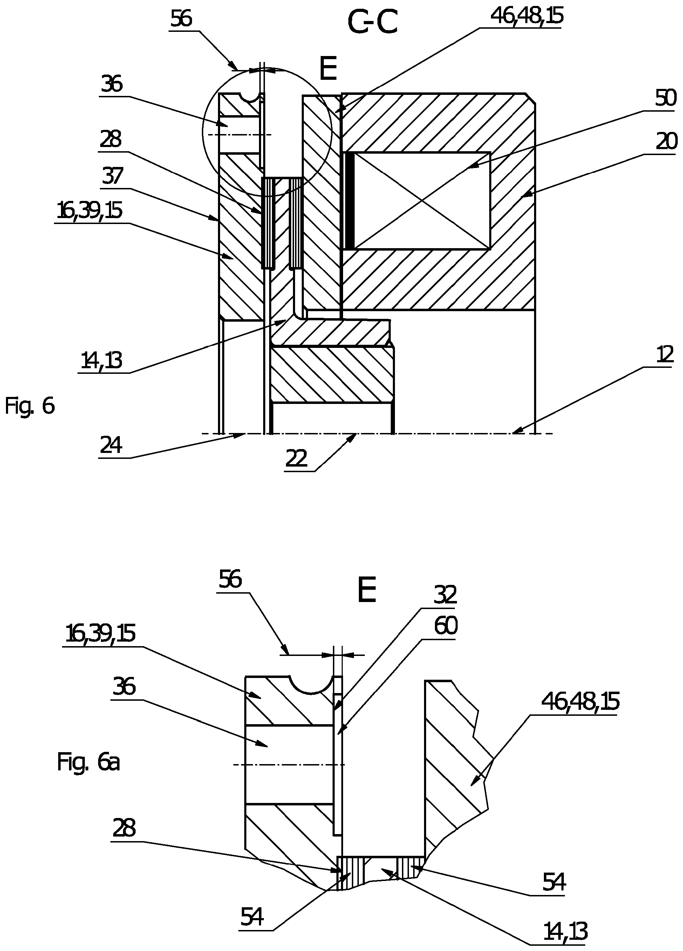

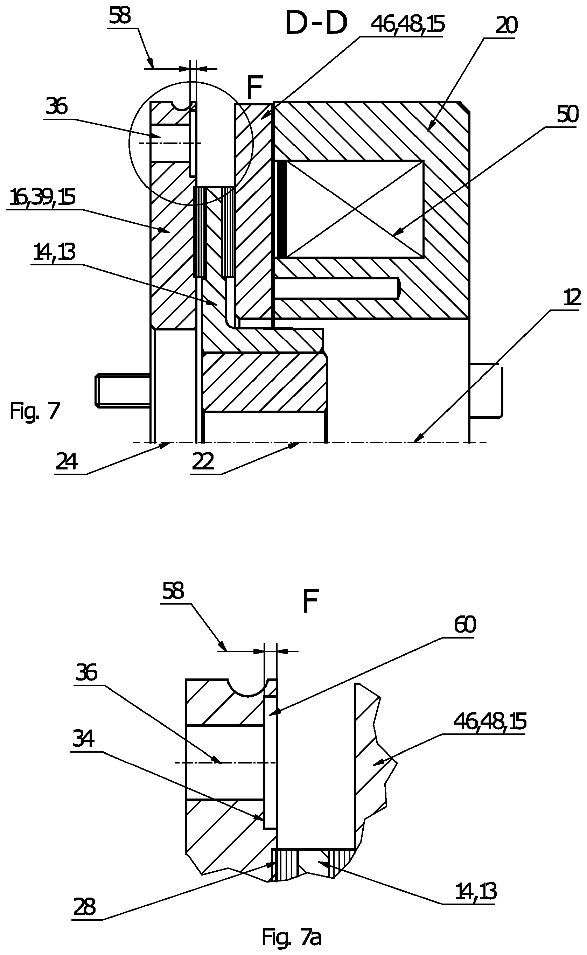

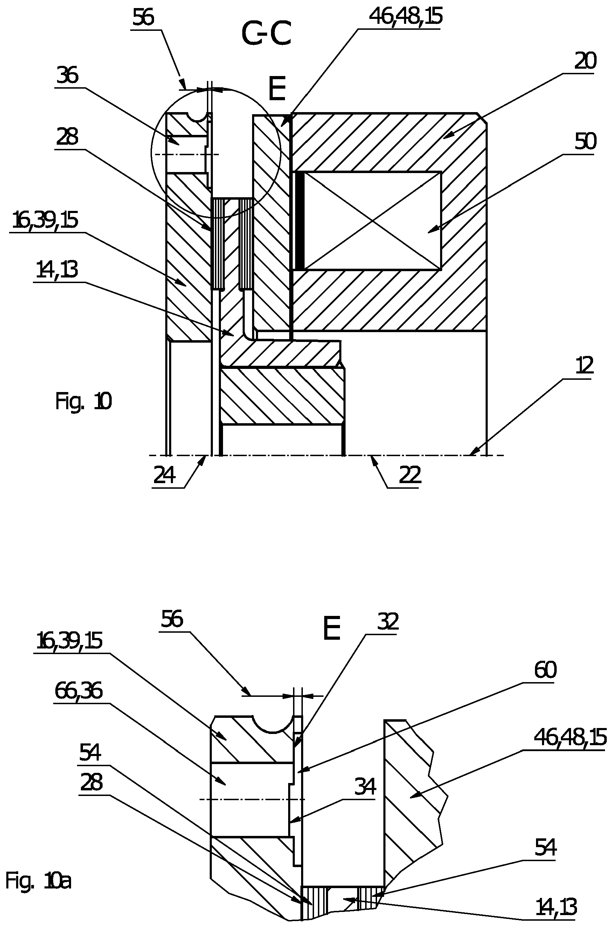

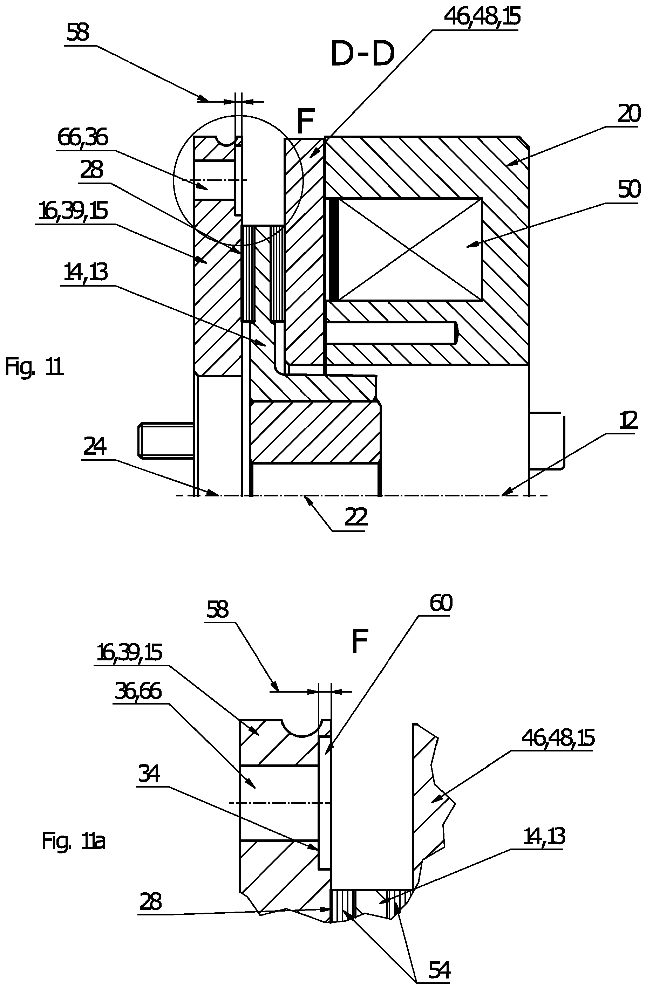

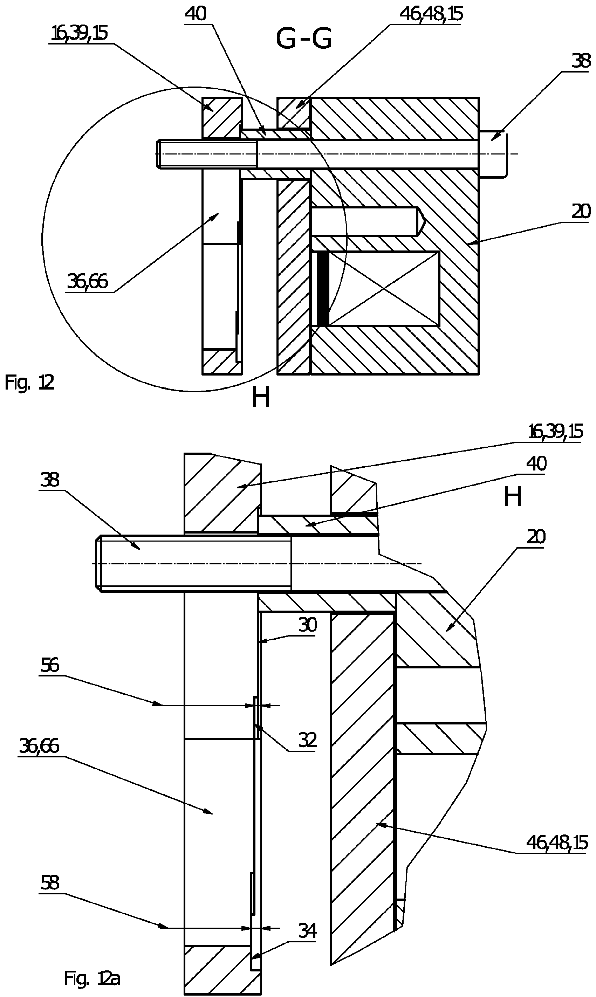

Die Figuren 1 bis 12a zeigen verschiedene Ansichten verschiedener Ausführungsbeispiele. Für gleiche und funktionsgleiche Teile werden die gleichen Bezugszeichen verwendet. Der Übersichtlichkeit halber werden nicht alle Bezugszeichen in jeder Figur verwendet.

Die Fig. 1 bis 4a zeigen verschiedene Ansichten eines ersten Ausführungsbeispiels einer als Federdruckbremse 11 ausgebildeten Bremseinheit 10. Die Erfindung soll zunächst exemplarisch anhand dieses Ausführungsbeispiels erläutert werden. Was das zweite und das dritte Ausführungsbeispiel betrifft, soll im Folgenden dargestellt werden, worin diese sich von dem ersten Ausführungsbeispiel unterscheiden.

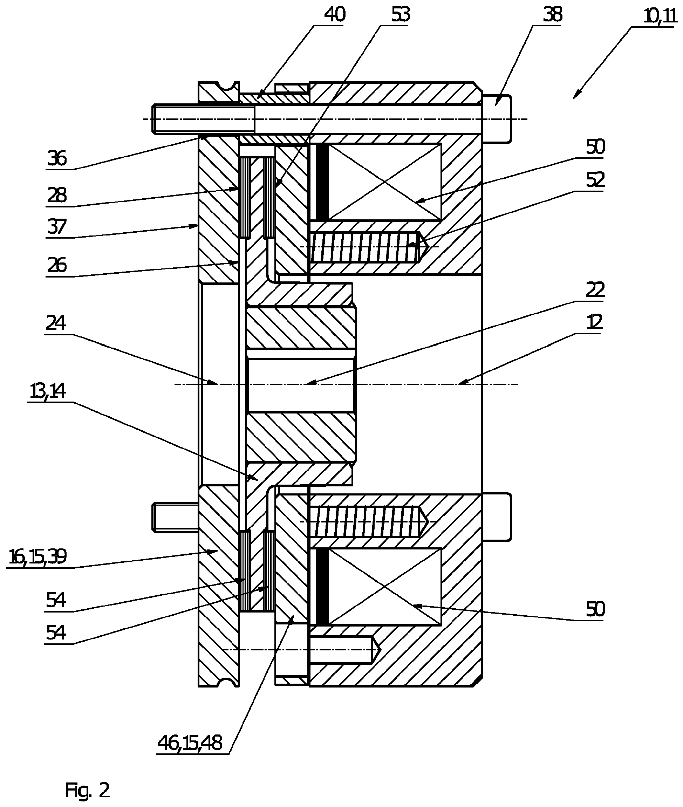

Einen Überblick über die Komponenten der Bremseinheit 10 zeigt Fig. 2. Die Bremseinheit 10 umfasst eine Einheitslängsachse 12, ein als Rotor 13 ausgebildetes erstes Bremselement 14, ein als Stator 15 ausgebildetes zweites Bremselement 16 und ein Gehäuse 20. Das erste Bremselement 14 ist dabei auf einer nicht dargestellten, auf der Einheitslängsachse 12 angeordneten, zu bremsenden Welle angeordnet. Eine erste Elementlängsachse 22 des ersten Bremselements 14 und eine zweite Elementlängsachse 24 des zweiten Bremselements 16 sind entlang der Einheitslängsachse 12 derart hintereinander angeordnet, dass die erste Elementlängsachse 22 und die zweite Elementlängsachse 24 jeweils auf der und parallel zu der Einheitslängsachse 12 angeordnet sind. Das zweite Bremselement 16 ist scheibenförmig als Rotationskörper um die zweite Elementlängsachse 24 ausgebildet, und weist darüber hinaus eine erste, senkrecht zur zweiten Elementlängsachse 24 angeordnete Stirnseite 26 auf. Das zweite Bremselement 16 weist außerdem eine Bremsfläche 28 sowie drei Anlagesektionen 29 mit jeweils einer Vielzahl an unterschiedlichen Anlageflächen, nämlich einer ersten Anlagefläche 30, einer zweiten Anlagefläche 32 und einer dritten Anlagefläche 34, auf. Die Anlageflächen 30, 32, 34 sind insbesondere in Fig. 1 dargestellt. Die Anlageflächen 30, 32, 34 sind ebenso wie die Bremsfläche 28 auf der ersten Stirnseite 26 angeordnet. Damit sind die Anlageflächen 30, 32, 34 und die Bremsflächen auf derselben Stirnseite des zweiten Bremselements 16 angeordnet.

Das zweite Bremselement 16 ist mittels jeder der Anlageflächen 30, 32, 34 mit dem Gehäuse 20 fest koppelbar. Damit ist das zweite Bremselement 16 insbesondere drehfest mit dem Gehäuse 20 koppelbar. Die Bremsfläche kann bei Kopplung einer der Anlageflächen 30, 32, 34 mit dem Gehäuse 20 mit dem ersten Bremselement 14 zur Erzeugung einer Bremswirkung in Wirkverbindung gebracht werden.

Zur Kopplung des zweiten Bremselements 16 mit dem Gehäuse 20 weist das zweite Bremselement 16 mehrere Kopplungsbohrungen 36 auf. Wie aus Fig. 2 erkennbar ist, sind die Kopplungsbohrungen 36 als Durchgangsbohrung zur Durchführung jeweils einer Kopplungsschraube 38 ausgebildet, mit der die Bremseinheit 10 beispielsweise an einem nicht dargestellten, in Fig. 2 links der Bremseinheit 10 anzuordnenden Motorflansch befestigbar ist. Bei einer derartigen Anordnung liegt das zweite Bremselement 16 vorzugsweise mit einer zweiten Stirnseite 37 an dem Motorflansch an. Die zweite Stirnseite 37 ist gegenüber der ersten Stirnseite 26 angeordnet. Das zweite Bremselement 16 ist in diesem Fall als Bremsenflansch 39 ausgebildet und kann zwischen dem Gehäuse 20 und dem Motorflansch eingeklemmt und so mit dem Gehäuse 20 gekoppelt werden. Die Kopplung kann so zerstörungsfrei lösbar ausgebildet sein. Zwischen dem zweiten Bremselement 16 und dem Gehäuse 20 sind im vorliegenden Ausführungsbeispiel zusätzliche Bauteile in Form von Distanzhülsen 40 angeordnet.

Wie Fig. 1 zeigt ist jede der Kopplungsbohrungen 36 in einer der Anlageflächen 30, 32, 34 angeordnet. Dadurch kann das Aufbringen eines Biegemoments auf das zweite Bremselement 16 durch die angezogenen Kopplungsschrauben 38 vermieden werden. Die Kopplungsbohrungen 36 sind auf einem gedachten Kopplungskreis 42 angeordnet, der auf der ersten Stirnseite 26 des zweiten Bremselements 16 angeordnet ist. Ein Kopplungskreismittelpunkt 44 des Kopplungskreises 42 ist auf der zweiten Elementlängsachse 24 angeordnet.

Fig. 2 zeigt weiter, dass das erste Bremselement 14 zwischen dem zweiten Bremselement 16 und einem dritten Bremselement 46 angeordnet ist, das ebenfalls als Stator 15 ausgebildet ist. Das dritte Bremselement 46 ist als Anker 48 der Federdruckbremse 11 ausgebildet und ist zur Betätigung der Bremseinheit 10 entlang der Einheitslängsachse 12 axial verschiebbar. Auf das dritte Bremselement 46 kann durch einen im Gehäuse 20 angeordneten Elektromagneten 50 eine Kraft ausgeübt werden, die die Bremseinheit 10 entgegen der Kraft von ebenfalls im Gehäuse 20 angeordneten Druckfedern 52 offen hält.

Durch Verschieben des dritten Bremselements 46 in Richtung des ersten Bremselements 14 kann ein bremsender Reibkontakt zwischen dem ersten Bremselement 14 und dem dritten Bremselement 46 sowie zwischen dem ersten Bremselement 14 und dem zweiten Bremselement 16 ausgebildet werden. Dafür ist auch das zweite Bremselement 16 entlang der Einheitslängsachse 12 axial verschiebbar angeordnet. Entsprechend dem zweiten Bremselement 16 weist das dritte Bremselement 46 dafür ebenfalls eine Bremsfläche 53 auf. An dem ersten Bremselement 14 ist an den dem zweiten Bremselement 16 und den dem dritten Bremselement 46 zugewandten Flächen jeweils mindestens ein Reibbelag 54 angeordnet, der dafür vorgesehen ist, mit den jeweiligen Bremsflächen 28, 53 des zweiten Bremselements 16 und des dritten Bremselements 46 in Reibkontakt zu treten.

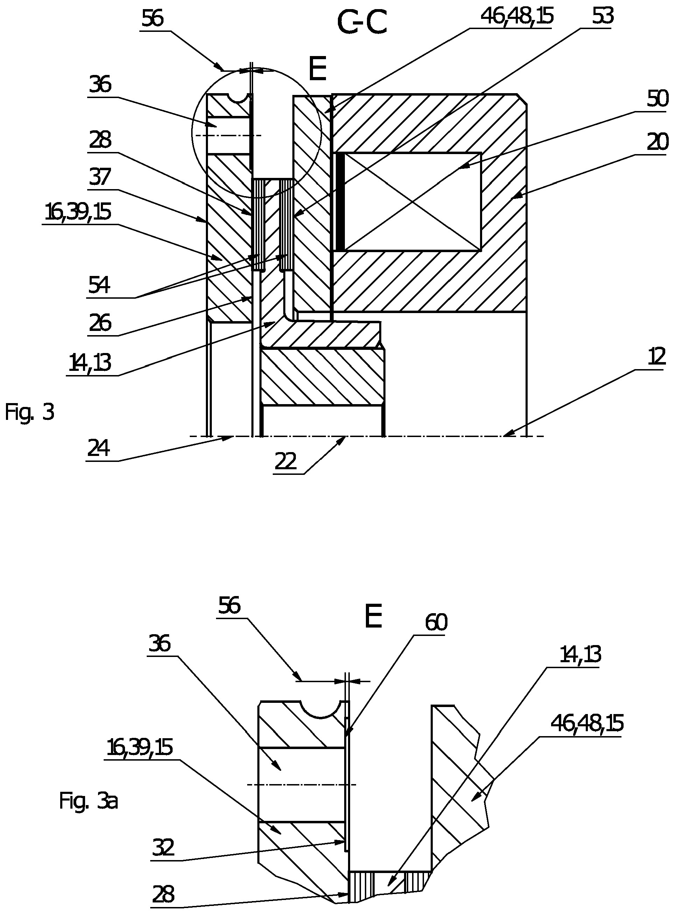

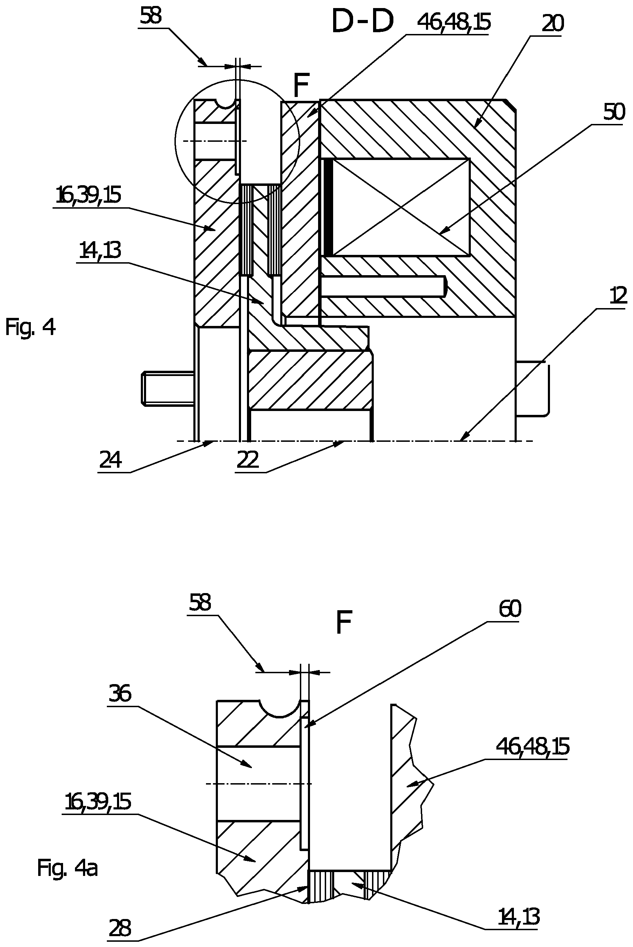

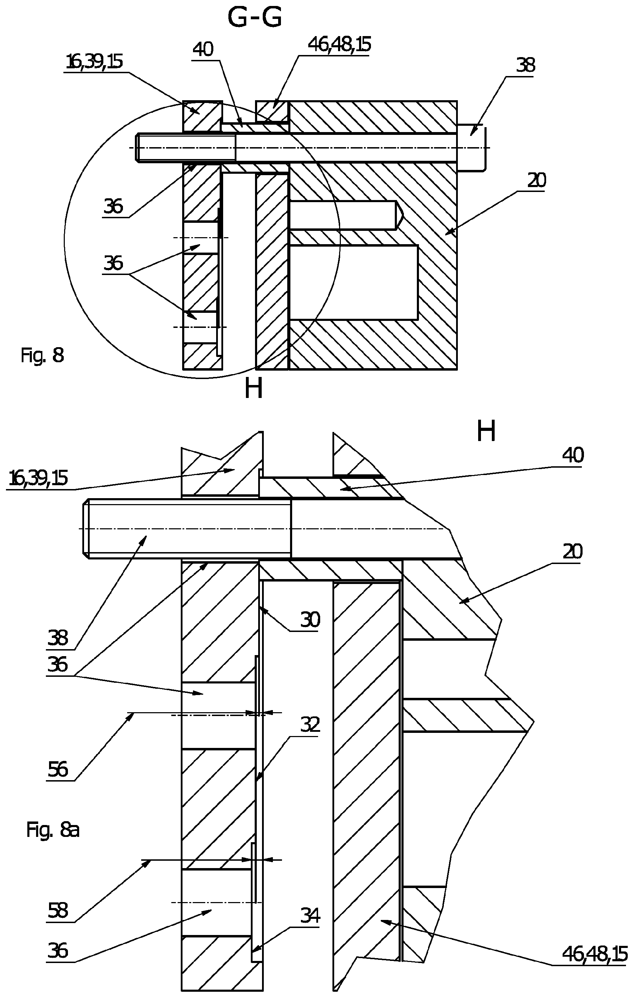

Die erste Anlagefläche 30, die zweite Anlagefläche 32 und die dritte Anlagefläche 34 jeder der Anlagesektionen 29 unterscheiden sich darin, dass sie zu der Bremsfläche 28 des zweiten Bremselements 16 entlang der zweiten Elementlängsachse 24 unterschiedliche Abstände aufweisen. So weist jede der ersten Anlageflächen 30 einen ersten Abstand, jede der zweiten Anlageflächen 32 einen zweiten Abstand 56 und jede der dritten Anlageflächen 34 einen dritten Abstand 58 zu der Bremsfläche 28 auf. Der zweite Abstand 56 ist in den Fig. 3 u. 3a und der dritte Abstand 58 in den Fig. 4 u. 4a gezeigt. Der erste Abstand ist beispielsweise in Fig. 8a u. 12a erkennbar.

Fig. 1 veranschaulicht, dass die unterschiedlichen Anlageflächen 30, 32, 34 nicht gleichzeitig mit dem Gehäuse 20 koppelbar sind. Durch die Verwendung der unterschiedlichen Anlageflächen 30, 32, 34 zur Kopplung des zweiten Bremselements 16 mit dem Gehäuse 20 kann so die Bremsfläche 28 des zweiten Bremselements 16 unterschiedlich nahe an dem ersten Bremselement 14 angeordnet werden. Damit kann eine Breite eines Luftspalts, der bei geöffneter Bremseinheit 10 insbesondere zwischen dem ersten Bremselement 14 und dem zweiten Bremselement 16 angeordnet ist, verstellt werden. Die Abstände liegen typischerweise im Bereich von 0 bis 1 mm. So kann beispielsweise der erste Abstand 0 mm betragen und der dritte Abstand 58 im Bereich von 0,5 bis 1 mm liegen.

Wie insbesondere in den Fig. 3a u. 4a zu erkennen ist, sind insbesondere die zweite Anlagefläche 32 und die dritte Anlagefläche 34 jeweils in einer Ausnehmung 60 des zweiten Bremselements 16 angeordnet. Die dritte Anlagefläche 34 ist dementsprechend tiefer in dem zweiten Bremselement 16 angeordnet als die zweite Anlagefläche 32. Dabei sind die Anlageflächen 30, 32, 34 parallel zu der Bremsfläche 28 angeordnet. Durch Verschieben und Anordnen des zweiten Bremselements 16 derart, dass anstatt der ersten Anlagefläche 30 die zweite Anlagefläche 32 oder die dritte Anlagefläche 34 mit dem Gehäuse 20 gekoppelt ist, kann das verschleißbedingte Abnehmen des mindestens einen Reibbelags 54, zumindest teilweise, ausgeglichen werden.

In Fig. 1 ist erkennbar, dass die Anlageflächen 30, 32, 34 auf dem Kopplungskreis 42 angeordnet sind. Dadurch kann durch ein Verdrehen des zweiten Bremselements 16 gegenüber dem Gehäuse 20 um den Kopplungskreismittelpunkt 44 die mit dem Gehäuse 20 zu koppelnde der Anlageflächen 30, 32, 34 ausgewählt werden. Die Anlageflächen 30, 32, 34 jeder der Anlagesektionen 29 sind nach ihrem jeweiligen Abstand zur Bremsfläche 28 in Umfangsrichtung um die zweite Elementlängsachse 24 aufsteigend geordnet angeordnet. So kann durch ein schrittweises Weiterdrehen des zweiten Bremselements 16 gegenüber dem Gehäuse 20 der Luftspalt stufenweise verstellt werden.

Jede der Anlagesektionen 29 ist identisch ausgebildet. Die Anlagesektionen 29 sind bezüglich der zweiten Elementlängsachse 24 winklig versetzt zueinander angeordnet und weisen damit einen winkligen Sektionsversatz 62 zueinander auf. Die drei Anlagesektionen 29 sind gleichmäßig zueinander versetzt angeordnet. Der Sektionsversatz 62 beträgt dementsprechend 120°.

Die Anlageflächen 30, 32, 34 jeder der Anlagesektionen 29 sind bezüglich der zweiten Elementlängsachse 24 ebenfalls winklig versetzt zueinander angeordnet und weisen damit einen winkligen Flächenversatz 64 zueinander auf. Der Flächenversatz 64 liegt bevorzugt im Bereich von 10° bis 30°, besonders bevorzugt im Bereich von 15° bis 25°. Der Sektionsversatz 62 zwischen den identischen der Anlageflächen 30, 32, 34 verschiedener der Anlagesektionen 29 ist damit größer als der Flächenversatz 64 zwischen den unterschiedlichen der Anlageflächen 30, 32, 34 einer der Anlagesektionen 29.

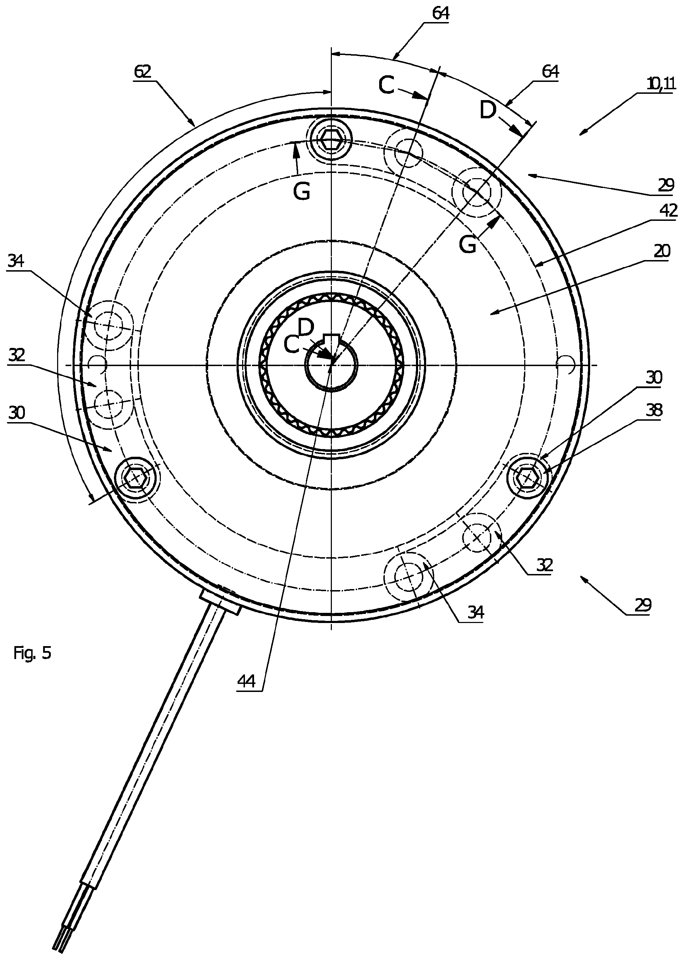

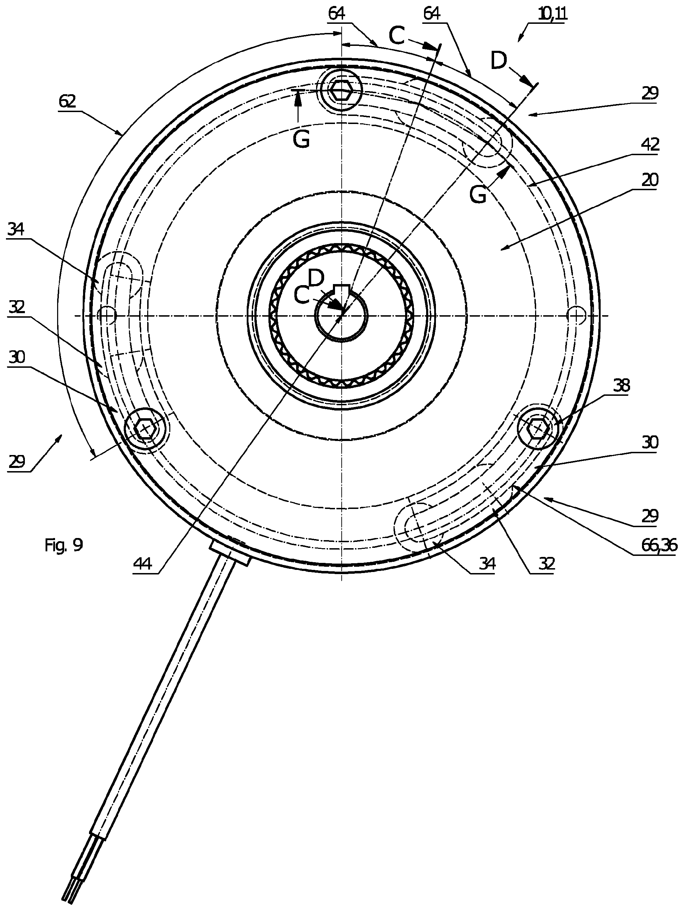

Bei dem in den Fig. 1-4a gezeigten ersten Ausführungsbeispiel sind die Anlageflächen 30, 32, 34 einer jeden Anlagesektion 29 beabstandet zueinander, also räumlich getrennt voneinander angeordnet (siehe insbesondere Fig. 1). Im zweiten (Fig. 5-8a) sowie dritten (Fig. 9-12a) Ausführungsbeispiel sind die Anlageflächen 30, 32, 34 jeder der Anlagesektionen 29 hingegen unmittelbar aneinander angrenzend angeordnet sein (siehe insbesondere Fig. 5, 8 u. 8a). Damit ergibt sich eine treppenstufenartige Anordnung der Anlageflächen 30, 32, 34 jeder der Anlagesektionen 29. So kann die Luftspaltverstellung mit vergleichsweise geringem axialem Spiel ermöglicht werden.

Das dritte, in den Fig. 9-12a dargestellte Ausführungsbeispiel zeichnet sich zusätzlich dadurch aus, dass die Kopplungsbohrungen 36 als Langloch 66 ausgebildet sind. Dadurch kann der Luftspalt verstellt werden, ohne dass die Kopplungsschrauben 38 entnommen werden müssen. Jedes der Langlöcher 66 erstreckt sich entlang des Kopplungskreises 42 über alle Anlageflächen 30, 32, 34 der jeweiligen Anlagesektion 29.

Ein Verfahren zur Luftspaltverstellung bei einem der zuvor beschriebenen Ausführungsbeispiele der Bremseinheit 10 umfasst die folgenden wesentlichen Schritte:
- Entkoppeln des Gehäuses 20 von dem zweiten Bremselement 16,
- Verdrehen des zweiten Bremselements 16 um die zweite Einheitslängsachse 12 gegenüber dem Gehäuse 20,
- Koppeln des Gehäuses 20 mit dem zweiten Bremselement 16.

Zum Entkoppeln des Gehäuses 20 werden die Kopplungsschrauben 38 gelöst. Im Falle des ersten Ausführungsbeispiels (Fig. 1-4a) und des zweiten Ausführungsbeispiels (Fig. 5-8a) werden anschließend die Kopplungsschrauben 38 zumindest aus den Kopplungsbohrungen 36 des zweiten Bremselements 16 entfernt. Beim dritten Ausführungsbeispiel (Fig. 9-12a) können die gelösten Kopplungsschrauben 38 aufgrund der Langlöcher 66 hingegen in den Kopplungsbohrungen 36 des zweiten Bremselements 16 verbleiben. Daraufhin kann das zweite Bremselement 16 um die Einheitslängsachse 12 gegenüber dem Gehäuse 20 verdreht werden, sodass das Gehäuse 20 in jeder der Anlagesektionen 29 mit einer anderen der Anlageflächen 30, 32, 34 als zuvor mit dem zweiten Bremselement 16 gekoppelt werden kann. Dazu wird das zweite Bremselement 16 zumindest um den einfachen Flächenversatz 64 verdreht. Anschließend kann der Zusammenbau in der entsprechend umgekehrten Reihenfolge erfolgen. Bei diesem Verfahren zur Verstellung des Luftspalts muss das zweite Bremselement 16 nicht weiter, insbesondere nicht von der Welle, demontiert werden. Ein derartiges Vorgehen kann demnach insbesondere dann von Vorteil sein, wenn die Bremseinheit 10 vom zweiten Bremselement 16 her unzugänglich ist, beispielsweise weil dort ein Motor angeordnet ist.

### Bezugszeichenliste

- 10: Bremseinheit
- 11: Federdruckbremse
- 12: Einheitslängsachse
- 13: Rotor
- 14: erstes Bremselement
- 15: Stator
- 16: zweites Bremselement
- 20: Gehäuse
- 22: erste Elementlängsachse
- 24: zweite Elementlängsachse
- 26: erste Stirnseite
- 28: Bremsfläche
- 29: Anlagesektion
- 30: erste Anlagefläche
- 32: zweite Anlagefläche
- 34: dritte Anlagefläche
- 36: Kopplungsbohrung
- 37: zweite Stirnseite
- 38: Kopplungsschraube
- 39: Bremsenflansch
- 40: Distanzhülse
- 42: Kopplungskreis
- 44: Kopplungskreismittelpunkt
- 46: drittes Bremselement
- 48: Anker
- 50: Elektromagnet
- 52: Druckfeder
- 53: Bremsfläche
- 54: Reibbelag
- 56: zweiter Abstand
- 58: dritter Abstand
- 60: Ausnehmung
- 62: Sektionsversatz
- 64: Flächenversatz
- 66: Langloch

## Patentansprüche

1. Bremseinheit (10), umfassend:
• eine Einheitslängsachse (12),
• ein erstes Bremselement (14) mit einer ersten Elementlängsachse (22),
• ein zweites Bremselement (16) mit einer zweiten Elementlängsachse (24), einer ersten Stirnseite (26), einer Bremsfläche (28) und einer Vielzahl an unterschiedlichen Anlageflächen (30, 32, 34),
und
• ein Gehäuse (20),
wobei
• die Anlageflächen (30, 32, 34) auf der ersten Stirnseite (26) des zweiten Bremselements (16) angeordnet sind,
• das zweite Bremselement(16) mittels jeder der Anlageflächen (30, 32, 34) mit dem Gehäuse (20) fest koppelbar ist,
• die Bremsfläche (28) bei Kopplung einer der Anlageflächen (30, 32, 34) mit dem Gehäuse (20) mit dem ersten Bremselement (14) in Wirkverbindung bringbar ist,
und **dadurch gekennzeichnet, dass**
• sich die unterschiedlichen Anlageflächen (30, 32, 34) darin unterscheiden, dass sie zu der Bremsfläche (28) entlang der zweiten Elementlängsachse (24) unterschiedliche Abstände (56, 58) aufweisen sowie winklig versetzt zueinander angeordnet sind.

2. Bremseinheit nach Anspruch 1,
**dadurch gekennzeichnet, dass** das
erste Bremselement (14) und das zweite Bremselement (16) entlang der Einheitslängsachse (12) derart hintereinander angeordnet sind, dass die erste Elementlängsachse (22) und die zweite Elementlängsachse (24) jeweils auf der und parallel zu der Einheitslängsachse (12) angeordnet sind.

3. Bremseinheit nach einem der vorhergehenden Ansprüche,
**dadurch gekennzeichnet, dass** auf der ersten Stirnseite (26) des zweiten Bremselements (16) um die zweite Elementlängsachse (24) ein gedachter Kopplungskreis (42) angeordnet ist, wobei die Anlageflächen (30, 32, 34) auf dem Kopplungskreis (42) angeordnet sind.

4. Bremseinheit nach einem der vorhergehenden Ansprüche,
**dadurch gekennzeichnet, dass** das zweite Bremselement (16) mindestens eine Anlagesektion (29) aufweist, die jeweils eine der unterschiedlichen Anlageflächen (30, 32, 34) umfasst.

5. Bremseinheit nach Anspruch 4,
**dadurch gekennzeichnet, dass** die unterschiedlichen Anlageflächen (30, 32, 34) der mindestens einen Anlagesektion (29) beabstandet zueinander oder unmittelbar aneinander angrenzend angeordnet sind.

6. Bremseinheit nach einem der Ansprüche 4 bis 5,
**dadurch gekennzeichnet, dass** das die mindestens eine Anlagesektion (29) mehrere, vorzugsweise beabstandet zueinander angeordnete, Anlagesektionen (29) umfasst.

7. Bremseinheit nach einem der vorhergehenden Ansprüche,
**dadurch gekennzeichnet, dass** das zweite Bremselement (16) mindestens eine Kopplungsbohrung (36) zur Kopplung des zweiten Bremselements (16) mit dem Gehäuse (20) aufweist.

8. Bremseinheit nach Anspruch 7,
**dadurch gekennzeichnet, dass** die mindestens eine Kopplungsbohrung (36) in mindestens einer der Anlageflächen (30, 32, 34) angeordnet ist.

9. Bremseinheit nach einem der Ansprüche 7 bis 8,
**dadurch gekennzeichnet, dass** die mindestens eine Kopplungsbohrung (36) als Langloch (66) ausgebildet ist.

10. Bremseinheit nach einem der vorhergehenden Ansprüche,
**dadurch gekennzeichnet, dass** das
erste Bremselement (14) als Rotor (13) und das zweite Bremselement (16) als Stator (15) ausgebildet ist.

11. Bremseinheit nach einem der vorhergehenden Ansprüche,
**dadurch gekennzeichnet, dass** das erste Bremselement (14) zwischen dem zweiten Bremselement (16) und einem, vorzugsweise als Stator (15) ausgebildeten, dritten Bremselement (46) angeordnet ist, wobei das dritte Bremselement (46) entlang der Einheitslängsachse (12) axial verschiebbar ist.

12. Bremseinheit nach einem der vorhergehenden Ansprüche,
**dadurch gekennzeichnet, dass** die Bremseinheit (10) als Federdruckbremse (11) oder Permanentmagnetbremse ausgebildet ist.

13. Bremseinheit nach den Ansprüchen 11 und 12,
**dadurch gekennzeichnet, dass** das zweite Bremselement (16) als Bremsenflansch (39) und/oder das dritte Bremselement (46) als Anker (48) ausgebildet ist.

14. Motor-Bremsen-Kombination, umfassend einen Motor mit einem Motorflansch sowie eine Bremseinheit (10) nach einem der vorhergehenden Ansprüche, wobei das zweite Bremselement (16) mit einer zweiten Stirnseite (37) dem Motorflansch zugewandt mit dem Motorflansch fest koppelbar ist.

15. Verfahren zur Luftspaltverstellung bei einer Bremseinheit (10) nach einem der Ansprüche 1 bis 13 oder bei einer Motor-Bremsen-Kombination nach Anspruch 14 mit folgenden Schritten:
• Entkoppeln des Gehäuses (20) von dem zweiten Bremselement (16),
• Verdrehen des zweiten Bremselements (16) um die Einheitslängsachse (12) gegenüber dem Gehäuse (20),
• Koppeln des Gehäuses (20) mit dem zweiten Bremselement (16).

## Claims

1. Brake unit (10), comprising:
• a unit longitudinal axis (12),
• a first brake element (14) having a first element longitudinal axis (22),
• a second brake element (16) having a second element longitudinal axis (24), a first end face (26), a brake surface (28), and a plurality of different contact surfaces (30, 32, 34),
and
• a housing (20),
wherein
• the contact surfaces (30, 32, 34) are arranged on the first end face (26) of the second brake element (16),
• the second brake element (16) can be firmly coupled to the housing (20) by means of each of the contact surfaces (30, 32, 34),
• the brake surface (28) can be brought into operative connection with the first brake element (14) upon coupling of one of the contact surfaces (30, 32, 34) to the housing (20),
and **characterised in that**
• the different contact surfaces (30, 32, 34) differ **in that** they are at different spacings (56, 58) from the brake surface (28) along the second element longitudinal axis (24) and are arranged so as to be angularly offset relative to one another.

2. Brake unit according to claim 1,
**characterised in that** the first brake element (14) and the second brake element (16) are arranged one behind the other along the unit longitudinal axis (12) such that the first element longitudinal axis (22) and the second element longitudinal axis (24) are in each case arranged on and in parallel with the unit longitudinal axis (12).

3. Brake unit according to either of the preceding claims,
**characterised in that** an imaginary coupling circle (42) is arranged on the first end face (26) of the second brake element (16), around the second element longitudinal axis (24), wherein the contact surfaces (30, 32, 34) are arranged on the coupling circle (42).

4. Brake unit according to any of the preceding claims,
**characterised in that** the second brake element (16) comprises at least one contact section (29) which in each case comprises one of the different contact surfaces (30, 32, 34).

5. Brake unit according to claim 4,
**characterised in that** the different contact surfaces (30, 32, 34) of the at least one contact section (29) are arranged at a spacing rom one another or immediately adjacently to one another.

6. Brake unit according to either of claims 4 to 5,
**characterised in that** the at least one contact section (29) comprises a plurality of contact sections (29), preferably arranged at a spacing from one another.

7. Brake unit according to any of the preceding claims,
**characterised in that** the second brake element (16) comprises at least one coupling hole (36) for coupling the second brake element (16) to the housing (20).

8. Brake unit according to claim 7,
**characterised in that** the at least one coupling hole (36) is arranged in at least one of the contact surfaces (30, 32, 34).

9. Brake unit according to either of claims 7 to 8,
**characterised in that** the at least one coupling hole (36) is configured as a slot (66).

10. Brake unit according to any of the preceding claims,
**characterised in that** the first brake element (14) is configured as a rotor (13) and the second brake element (16) is configured as a stator (15).

11. Brake unit according to any of the preceding claims,
**characterised in that** the first brake element (14) is arranged between the second brake element (16) and a third brake element (46), preferably configured as a stator (15), wherein the third brake element (46) is axially displaceable along the unit longitudinal axis (12).

12. Brake unit according to any of the preceding claims,
**characterised in that** the brake unit (10) is configured as a spring force brake (11) or permanent magnet brake.

13. Brake unit according to claims 11 and 12,
**characterised in that** the second brake element (16) is configured as a brake flange (39) and/or the third brake element (46) is configured as an armature (48).

14. Motor/brake combination, comprising a motor having a motor flange and a brake unit (10) according to any of the preceding claims, wherein the second brake element (16) can be firmly coupled to the motor flange by a second end face (37) facing the motor flange.

15. Method for air gap adjustment in a brake unit (10) according to any of claims 1 to 13 or in a motor/brake combination according to claim 14, said method comprising the following steps:
• decoupling the housing (20) from the second brake element (16),
• rotating the second brake element (16), about a unit longitudinal axis (12), relative to the housing (20),
• coupling the housing (20) to the second brake element (16).

## Revendications

1. Unité (10) de freinage comprenant :
• un axe (12) longitudinal d'unité,
• un premier élément (14) de frein ayant un premier axe (22) longitudinal d'élément,
• un deuxième élément (16) de frein ayant un deuxième axe (24) longitudinal d'élément, un premier côté (26) frontal, une surface (28) de frein et une pluralité de surfaces (30, 32, 34) d'application différentes,
et
• un carter (20),
dans laquelle
• les surfaces (30, 32, 34) d'application sont disposées sur le premier côté (26) frontal du deuxième élément (16) de frein,
• le deuxième élément (16) de frein est assemblé de manière fixe au carter (20) au moyen de chacune des surfaces (30, 32, 34) d'application,
• la surface (28) de freinage peut, lors de l'assemblage de l'une des surfaces (30, 32, 34) d'application au carter (20), être mise en liaison d'action avec le premier élément (14) de frein,
et **caractérisée en ce que**
• les différentes surfaces (30, 32, 34) d'application se distinguent **en ce qu'**elles ont des distances (56, 58) différentes, le long du deuxième axe (24) longitudinal d'élément, à la surface (28) de freinage ainsi **en ce qu'**elles sont disposées les unes par rapport aux autres d'une manière décalée angulairement.

2. Unité de freinage suivant la revendication 1,
**caractérisée en ce que** le premier élément (14) et le deuxième élément (16) de frein sont disposés l'un derrière l'autre le long de l'axe (12) longitudinal de l'unité, **en ce que** le premier axe (22) longitudinal d'élément et le deuxième axe (24) longitudinal d'élément sont disposés respectivement sur l'axe (12) longitudinal d'unité en y étant parallèles.

3. Unité de freinage suivant l'une des revendications précédentes,
**caractérisée en ce qu'**un cercle (42) d'assemblage imaginaire est disposé sur le premier côté (26) frontal du deuxième élément (16) de frein autour du deuxième axe (24) longitudinal d'élément, dans lequel les surfaces (30, 32, 34) d'application sont disposées sur le cercle (42) d'assemblage.

4. Unité de freinage suivant l'une des revendications précédentes,
**caractérisée en ce que** le deuxième élément (16) de frein a au moins une section (29) d'application, qui comprend respectivement l'une des différentes surfaces (30, 32, 34) d'application.

5. Unité de freinage suivant la revendication 4,
**caractérisée en ce que** les différentes surfaces (30, 32, 34) d'application d'au moins une section (29) sont disposées à distance l'une de l'autre ou voisines directement l'une de l'autre.

6. Unité de freinage suivant l'une des revendications 4 à 5, **caractérisée en ce qu'**au moins une section (29) d'application comprend plusieurs sections (29) d'application, disposées de préférence à distance des unes des autres.

7. Unité de freinage suivant l'une des revendications précédentes,
**caractérisée en ce que** le deuxième élément (16) de frein a au moins un alésage (36) d'assemblage pour l'assemblage du deuxième élément (16) de frein au carter (20).

8. Unité de freinage suivant la revendication 7,
**caractérisée en ce qu'**au moins un alésage (36) d'assemblage est disposé dans au moins l'une des surfaces (30, 32, 34) d'application.

9. Unité de freinage suivant l'une des revendications 7 à 8, **caractérisée en ce qu'**au moins un alésage (36) d'assemblage est constitué sous la forme d'une boutonnière (66).

10. Unité de freinage suivant l'une des revendications précédentes,
**caractérisée en ce que** le premier élément (14) de frein est constitué en rotor (13) et le deuxième élément (16) de frein en stator (15).

11. Unité de freinage suivant l'une des revendications précédentes,
**caractérisée en ce que** le premier élément (14) de frein est disposé entre le deuxième élément (16) de frein et un troisième élément (46) de frein, constitué de préférence en stator (15), dans lequel le troisième élément (46) de frein peut coulisser axialement le long de l'axe (12) longitudinal de l'unité.

12. Unité de freinage suivant l'une des revendications précédentes,
**caractérisée en ce que** l'unité (10) de frein est constituée en frein (11) à pression par un ressort ou en frein à aimant permanent.

13. Unité de freinage suivant les revendications 11 et 12, **caractérisée en ce que** le deuxième élément (16) de frein est constitué en flasque (39) de frein et le troisième élément (46) de frein en armature (48).

14. Combinaison moteur-frein comprenant un moteur ayant un flasque de moteur ainsi qu'une unité (10) de freinage suivant l'une des revendications précédentes, dans lequel le deuxième élément (16) de frein peut, par un deuxième côté (37) frontal, être assemblé de manière fixe au flasque du moteur en étant tourné vers le flasque du moteur.

15. Procédé de réglage de l'entrefer dans une unité (10) de freinage suivant l'une des revendications 1 à 13 ou dans une combinaison moteur-frein suivant la revendication 14, comprenant les stades suivants :
• désassemblage du carter (20) du deuxième élément (16) de frein,
• rotation du deuxième élément (16) de frein autour de l'axe (12) longitudinal de l'unité par rapport au carter (20),
• assemblage du carter (20) au deuxième élément (16) de frein.
